# EUROPEAN PATENT APPLICATION

(11) **EP 4 316 637 A1**
(43) Date of publication of application: **07.02.2024**
(21) Application number: 23188684.7
(22) Date of filing: 31.07.2023
(51) Int. Cl.: B01J 3/03, B01J 12/00, B01J 19/00, B01J 19/02

(54) **POLYMERIZATION APPARATUS**

(30) Priority: 04.08.2022 JP 2022124785
(71) Applicant: Horiba Stec, Co., Ltd., Kyoto-shi, Kyoto 601-8116 (JP)
(72) Inventor: HIRAHARA, Kazuhiro, Kyoto-shi (JP); OGAKI, Ryosuke, Kyoto-shi (JP); HAMAGUCHI, Takaaki, Kyoto-shi (JP)
(74) Representative: Müller-Boré & Partner Patentanwälte PartG mbB

(57) **Abstract**

A polymerization apparatus for performing anionic polymerization includes: a raw material container that contains a raw material; a reaction container that is connected to the raw material container via a raw material supply pipe and causes anionic polymerization of the raw material supplied; and a switching valve that is provided in the raw material supply pipe and opens and closes the raw material supply pipe, and the raw material supply pipe includes a joint portion sealed by using a metal gasket, and the switching valve is a gas valve.

## Description

### CROSS-REFERENCE TO RELATED APPLICATIONS

The present application claims priority to Japan Patent Application No. 2022-124785 filed August 4, 2022, which is incorporated herein by reference in its entirety.

### BACKGROUND OF THE INVENTION

### 1. TECHNICAL FIELD

The present invention relates to a polymerization apparatus for performing anionic polymerization.

### 2. DESCRIPTION OF THE RELATED ART

As a polymerization apparatus of this type, as shown in WO 2015/093611 A, there is known a polymerization apparatus in which a plurality of raw material containers containing a raw material monomer and a polymerization initiator and a reaction container for performing a polymerization reaction are connected by a pipe, and these raw materials are continuously supplied to the reaction container to perform a polymerization reaction to synthesize a polymer.

### Prior Art Document

### Patent Document

Patent Document 1: WO 2015/093611 A

### SUMMARY OF THE INVENTION

When a monomer is polymerized using a conventional polymerization apparatus as described above, components (CO₂, O₂, H₂O) in air unintentionally mixed in a pipe or a reaction container inhibit a polymerization reaction by deactivating a polymerization initiator or a growing terminal, and a polymer is not stably synthesized in some cases. Such a phenomenon is particularly remarkable when a polymer is synthesized by anionic polymerization using a polymerization apparatus.

The present invention has been made in view of the above problems, and a main object of the present invention is to provide a polymerization apparatus capable of reducing inhibition of polymerization reaction caused by the components in air and stably performing anionic polymerization.

The inventors of the present invention conducted intensive studies to solve the above problems, and as a result, they focused on the fact that in a polymerization apparatus, a plurality of valves such as a valve for closing a channel for container replacement and a valve for adjusting the supply amount of a raw material are provided in a pipe connecting a reaction container and a raw material container, and the pipe is configured by connecting a plurality of pipe members to provide such valves. As a result of further intensive studies by the inventors of the present invention, it has been found that in a conventional polymerization apparatus, a gasket seal made of resin having low airtightness is used for a joint portion of a pipe, and a valve having low airtightness is also used, and such a joint portion of the pipe and the valve become a main mixing channel of air, and thus, the present invention has been made.

A polymerization apparatus according to the present invention is for performing anionic polymerization, the polymerization apparatus including: a raw material container that contains a raw material; a reaction container that is connected to the raw material container via a raw material supply pipe and causes anionic polymerization of the raw material supplied; and a switching valve that is provided in the raw material supply pipe and opens and closes the raw material supply pipe, wherein the raw material supply pipe includes a joint portion sealed by using a metal gasket, and the switching valve is a gas valve.

Such a polymerization apparatus, in which the joint portion of the raw material supply pipe is sealed by using a metal gasket having high airtightness, and a gas valve having higher airtightness than a valve for liquid is used as the valve provided in the raw material supply pipe, can prevent components (O₂, CO₂, H₂O, etc.) in air that inhibit anionic polymerization reaction from being mixed through the joint portion of the raw material supply pipe or the gap between the valves. As a result, anionic polymerization can be stably performed as compared with a case in which the joint portion is sealed by using a fluororesin gasket or in which a valve for liquid is used.

As a specific aspect of the switching valve, a switching valve having a leak rate of 4 × 10⁻⁹ std·cm³/s or less may be exemplified.

When the leak rate of the switching valve is in such a range, mixing of components (O₂, CO₂, H₂O, etc.) in air can be further prevented, and anionic polymerization can be stably performed.

As a specific aspect of the joint portion in the raw material supply pipe, a joint portion having a leak rate of 4 × 10⁻¹¹ std·cm³/s or less may be exemplified.

When the leak rate of the joint portion of the raw material supply pipe is in such a range, mixing of components (O₂, CO₂, H₂O, etc.) in air can be further prevented, and anionic polymerization can be stably performed.

In the present specification, the "leak rate" means a value obtained by performing a test in accordance with Appendix 1 (normative) Vacuum spray method (spray method) of Method for helium leak testing of JIS Z 2331:2006 or an evaluation method corresponding to the method. Note that "std·cm³/s" means "standard cc/s".

In the polymerization apparatus, the raw material supply pipe is preferably connected to the reaction container and the raw material container by welding joining.

This configuration, in which the raw material supply pipe is connected to the reaction container and the raw material container by welding joining, can eliminate an air mixing path at a connection portion. This makes it possible to further reduce components (O₂, CO₂, H₂O, etc.) in air to be mixed, and to more stably perform anionic polymerization in the reaction container.

In order to further reduce components in air to be mixed through the raw material supply pipe, it is preferable that the polymerization apparatus includes: a plurality of the raw material containers; and a plurality of the raw material supply pipes respectively connecting the plurality of the raw material containers and the reaction container, and all the joint portions included in the plurality of the raw material supply pipes are sealed by using a metal gasket. For the same reason, in the polymerization apparatus, all the switching valves provided in the plurality of the raw material supply pipes are preferably gas valves, and all the plurality of the raw material supply pipes are preferably connected to the reaction container and the corresponding raw material containers by welding joining.

The polymerization apparatus preferably includes a stirring mechanism that stirs the raw material supplied to the reaction container, the stirring mechanism including a stirring blade accommodated in the reaction container, and a drive mechanism that is disposed outside the reaction container and rotates the stirring blade with magnetic force.

By using such a stirring mechanism, it is possible to provide the stirring blade and the drive mechanism separately inside and outside the reaction container without providing some components (for example, a shaft member or the like) of the stirring mechanism in such a manner as to penetrate the wall of the reaction container. This makes it possible to prevent mixing of air from an installation portion of the stirring mechanism.

As a specific aspect for feeding the raw material contained in the raw material container to the raw material supply pipe, the polymerization apparatus preferably includes a pressure feeding mechanism for feeding the raw material in the raw material container to the raw material supply pipe with pressure, the pressure feeding mechanism including a pressurized gas container that contains a pressurized gas, a pressurized gas supply pipe that connects the pressurized gas container and the raw material container, a valve for pressurized gas that opens and closes the pressurized gas supply pipe, a weighing device that measures a weight of the raw material container, and a control unit that adjusts an opening degree of the valve for pressurized gas based on the weight of the raw material container acquired by the weighing device.

With this configuration, the valve for pressurized gas is not operated manually by the user, but the opening degree of the valve for pressurized gas is adjusted by the control unit, and thus, a desired amount of raw material can be accurately fed.

In the polymerization apparatus, it is preferable that the pressurized gas supply pipe includes a joint portion sealed by using a metal gasket, the valve for pressurized gas is a gas valve, and the pressurized gas supply pipe is connected to the pressurized gas container and the raw material container by welding joining.

This configuration can reduce the amount of air to be mixed from the joint portion of the pressurized gas supply pipe and the valve for pressurized gas, and anionic polymerization can be more stably performed.

When the polymerization apparatus is for performing living anionic polymerization, the effects of the present invention can be more remarkably exhibited.

With the use of each of the polymerization apparatuses having high airtightness as described above, a block copolymer satisfying 1.024 ≤ Mw/Mn ≤ 1.094 can be synthesized in a yield of 90% or more in a range of 44,000 ≤ Mw ≤ 1,023,000. Here, Mw is a weight average molecular weight, and Mn is a number average molecular weight.

The polymerization apparatus of the present invention may be a polymerization apparatus for performing anionic polymerization, the polymerization apparatus including a raw material container that contains a raw material, a reaction container that is connected to the raw material container via a raw material supply pipe and causes anionic polymerization of the raw material supplied, and a switching valve that is provided in the raw material supply pipe and opens and closes the raw material supply pipe, wherein the raw material supply pipe includes a joint portion having a leak rate of 4 × 10⁻¹¹ std·cm³/s or less, and the switching valve has a leak rate of 4 × 10⁻⁹ std·cm³/s or less.

Such a polymerization apparatus also can achieve the same effects as those of the polymerization apparatus described above.

According to the present invention configured as described above, it is possible to provide a polymerization apparatus capable of reducing inhibition of polymerization reaction caused by components in air and stably performing anionic polymerization.

### BRIEF DESCRIPTION OF THE DRAWINGS

FIG. 1 is a diagram showing an overall configuration of a polymerization apparatus according to an embodiment of the present invention;
FIG. 2 is a chemical formula showing an example of an anionic polymerization reaction with the polymerization apparatus of the embodiment;
FIG. 3 is a partial sectional view schematically showing an example of a structure of a joint portion of the polymerization apparatus of the embodiment;
FIG. 4 is an exploded view schematically showing an example of a configuration of the joint portion of the polymerization apparatus of the embodiment;
FIG. 5 is a sectional view schematically showing an example of a configuration of a valve of the polymerization apparatus of the embodiment;
FIG. 6 is a table showing molecular weights and the like of polymers synthesized by living anionic polymerization using the polymerization apparatus of the embodiment;
FIG. 7 is a diagram showing an overall configuration of a polymerization apparatus according to another embodiment of the present invention;
FIG. 8 is a view showing a configuration of a raw material container according to another embodiment;
FIG. 9 is a diagram showing a configuration of an apparatus used in an experimental example;
FIG. 10 is a diagram showing conditions and analysis results of an experimental example;
FIG. 11 is a diagram showing a GPC waveform obtained in Experimental Example 9; and
FIG. 12 is a diagram showing a GPC waveform obtained in Experimental Example 11.

### DETAILED DESCRIPTION

Hereinafter, a polymerization apparatus 100 according to an embodiment of the present invention will be described with reference to the drawings.

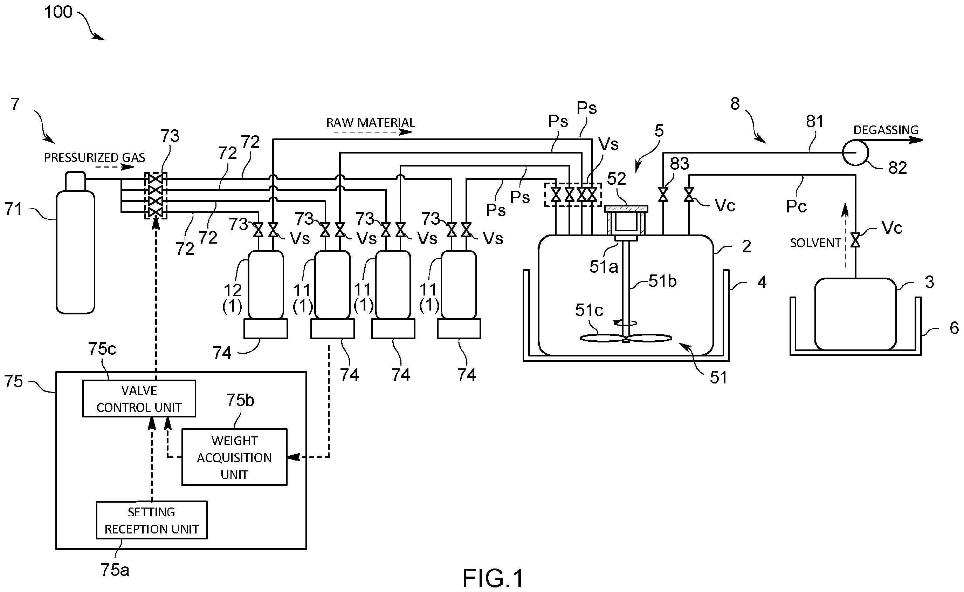

The polymerization apparatus 100 of the present embodiment is used for performing anionic polymerization (specifically, living anionic polymerization). Specifically, as shown in FIG. 1, the polymerization apparatus 100 includes a plurality of raw material containers 1 that contain raw materials such as a raw material monomer and a polymerization initiator, a reaction container 2 that causes the raw materials supplied from the respective raw material containers 1 to react and undergo living anionic polymerization, and a solvent container 3 that contains a solvent for polymerization. The polymerization apparatus 100 of the present embodiment is a continuous type polymerization apparatus, which continuously supplies the raw material monomer and the polymerization initiator from each raw material container 1 into the reaction container 2 to which the solvent is supplied to perform polymerization. Here, each part will be described below assuming that polymer polystyrene (specifically, a polystyrene-polymethyl methacrylate copolymer) is synthesized.

The raw material container 1 is a highly airtight container made of metal such as stainless steel. The polymerization apparatus 100 of the present embodiment includes, as the raw material container 1, a plurality of (here, three) monomer containers 11 that contain raw material monomers to be subjected to living anionic polymerization, and an initiator container 12 that contains a polymerization initiator. In each monomer container 11, styrene (St) and methyl methacrylate (MMA) as raw material monomers and 1,1-diphenylethylene (DPE) as a binder are contained. The initiator container 12 contains secondary butyl lithium (Sec-BuLi) as a polymerization initiator. The raw material monomer and the polymerization initiator contained in each container are not limited to these materials and may be appropriately changed according to the type of the target polymer. The raw material container 1 may include a stopper container (not illustrated) that contains a reaction stopper (MeOH) or the like for stopping the polymerization reaction.

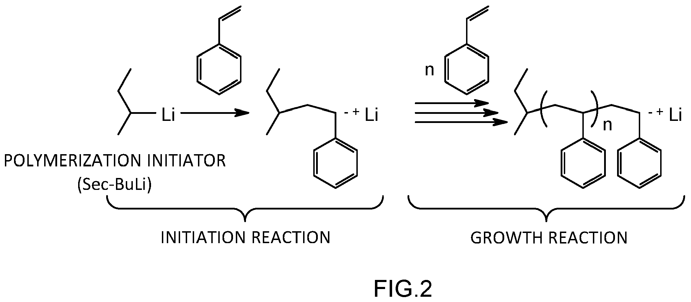

The reaction container 2 is a highly airtight container made of metal such as stainless steel. When a raw material monomer (for example, styrene) and a polymerization initiator (for example, secondary butyl lithium) are supplied at a predetermined ratio into the reaction container 2, living anionic polymerization constituted by an initiation reaction and a growth reaction is performed as illustrated in FIG. 2. The surface of the reaction container 2 is cooled by a cooling mechanism 4. The cooling mechanism 4 includes, for example, a cooling tank using a mixture of dry ice and methanol (MeOH) as a cryogen, and the reaction container 2 is put in the cooling tank and cooled to, for example, about -70°C or less. The reaction container 2 is provided with a stirring mechanism 5 that stirs the raw material supplied into the reaction container 2.

The reaction container 2 and each of the raw material containers 1 described above are connected via a raw material supply pipe Ps. Each raw material supply pipe Ps is configured by connecting a plurality of metal pipe members, and a joint portion between the pipe members is hermetically sealed by using a gasket. Specifically, the joint portion is sealed by sandwiching the gasket between flanges of continuous pipe members and fixing both flanges by bolting. Each raw material supply pipe Ps has an upstream end connected to the upper surface of the corresponding raw material container 1 and a downstream end connected to the upper surface of the reaction container 2. Each raw material supply pipe Ps is provided with one or a plurality of switching valves Vs (hereinafter, referred to as a raw material supply valve) for opening and closing the channel. The switching valve Vs is also connected to the pipe member via a joint portion, and the joint portion between the valve Vs and the pipe member is also hermetically sealed using a gasket.

The solvent container 3 is a highly airtight container made of metal such as stainless steel, for example, and is used for storing a polymerization solvent for performing solution polymerization therein and distilling the solvent for polymerization under reduced pressure. The temperature of the solvent container 3 is controlled by a temperature control mechanism 6 so that the solvent for polymerization stored therein is maintained at a predetermined temperature. The temperature control mechanism 6 includes, for example, a constant temperature water tank, and the temperature of the solvent container 3 is adjusted to about 40°C by immersing the solvent container 3 in the constant temperature water tank. The solvent for polymerization of the present embodiment is obtained by adding benzophenone and sodium to tetrahydrofuran (THF) and dehydrating the mixture, but the solvent is not limited to this solvent.

The solvent container 3 and the reaction container 2 are connected via a solvent pipe Pc. The solvent pipe Pc is formed by connecting a plurality of metal pipe members, and a joint portion between the pipe members is hermetically sealed by using a gasket. The solvent pipe Pc has an upstream end connected to the upper surface of the reaction container 2 and a downstream end connected to the upper surface of the solvent container 3. The solvent pipe Pc is provided with one or a plurality of solvent valves Vc for opening and closing the channel.

The polymerization apparatus 100 also includes a pressure feeding mechanism 7 for feeding the raw material in each raw material container 1 to the raw material supply pipe Ps with pressure. The pressure feeding mechanism 7 includes a pressurized gas container 71 that stores a pressurized gas, a plurality of pressurized gas supply pipes 72 that connect the pressurized gas container 71 and each raw material container 1, a valve for pressurized gas 73 provided in each pressurized gas supply pipe 72, a weighing device 74 that measures a weight of each raw material container 1, and a control unit 75 that controls an amount of a raw material to be fed with pressure to each raw material supply pipe Ps.

The pressurized gas container 71 is, for example, a gas cylinder or the like that contains a pressurized gas made of an inert gas such as argon gas or nitrogen gas. The pressure of the pressurized gas is set to be higher than the pressure in each raw material container 1 and the pressure in the reaction container 2.

The pressurized gas supply pipe 72 is configured by connecting a plurality of metal pipe members, and a joint portion between the pipe members is hermetically sealed by using a gasket, as in the case of the raw material supply pipe Ps and the like. The downstream end of each pressurized gas supply pipe 72 is connected to the upper surface of the corresponding raw material container 1.

One or a plurality of valve for pressurized gass 73 are provided in each of the pressurized gas supply pipes 72 to open and close the channel of the corresponding pressurized gas supply pipe 72.

The weighing device 74 individually measures the weight of each raw material container 1 containing the raw material (that is, the sum of the weight of the raw material container 1 itself and the weight of the contained raw material), and transmits the measurement result to the control unit 75 as weight data. The weighing device 74 may use any measurement principle such as a spring scale, a load cell type scale, or an electromagnetic type scale as long as the weight of each raw material container 1 can be measured.

The control unit 75 is a general-purpose or dedicated computer incorporating a CPU, an internal memory, and the like. The control unit 75 at least exhibits functions as a setting reception unit 75a, a weight acquisition unit 75b, and a valve control unit 75c with the CPU and its peripheral devices cooperating with each other based on a predetermined program stored in the internal memory.

The setting reception unit 75a receives a set value of the weight of the raw material to be fed with pressure to each raw material supply pipe Ps from the user and stores the set value. The weight acquisition unit 75b constantly acquires weight data indicating the weight of each raw material container 1 from each weighing device 74 and transmits the weight data to the valve control unit 75c. The valve control unit 75c adjusts the opening degree of each valve for pressurized gas 73 based on the set value received by the setting reception unit 75a and the weight of each raw material container 1. Specifically, the valve control unit 75c calculates the weight of each raw material fed with pressure from each raw material container 1 based on the temporal change in the weight of each raw material container 1, and compares the value of the weight with the set value. When the value of the raw material fed with pressure reaches the set value, the valve control unit 75c closes the valve for pressurized gas 73 and stops feeding of the raw material with pressure.

The polymerization apparatus 100 also includes a degassing mechanism 8 that degasses the inside of the reaction container 2. The degassing mechanism 8 includes a degassing pipe 81 having an upstream end connected to the reaction container 2 and a vacuum pump (specifically, a molecular turbo pump) 82 connected to a downstream end of the degassing pipe 81. The degassing pipe 81 is configured by connecting a plurality of metal pipe members, and a joint portion between the pipe members is hermetically sealed by using a gasket, as in the case of the raw material supply pipe Ps and the like. An upstream end of the degassing pipe 81 is connected to the upper surface of the reaction container 2. The degassing pipe 81 is provided with one or a plurality of degassing valves 83 for opening and closing a degassing channel.

Thus, in the polymerization apparatus 100 of the present embodiment, at least the joint portion of the raw material supply pipe Ps is sealed by using a metal gasket, and the raw material supply valve Vs is configured using a gas valve to reduce inhibition of polymerization reaction caused by components in air.

The metal gasket is made of metal such as nickel, stainless steel, or copper, for example. In the polymerization apparatus 100 of the present embodiment, at least all the joint portions included in the raw material supply pipe Ps connecting the initiator container 12 and the reaction container 2 are sealed by using a metal gasket, and here, all the joint portions of all the plurality of raw material supply pipes Ps are sealed by using a metal gasket.

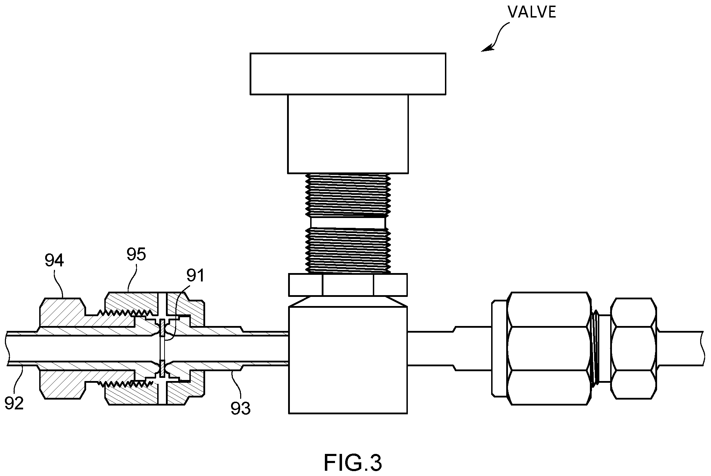

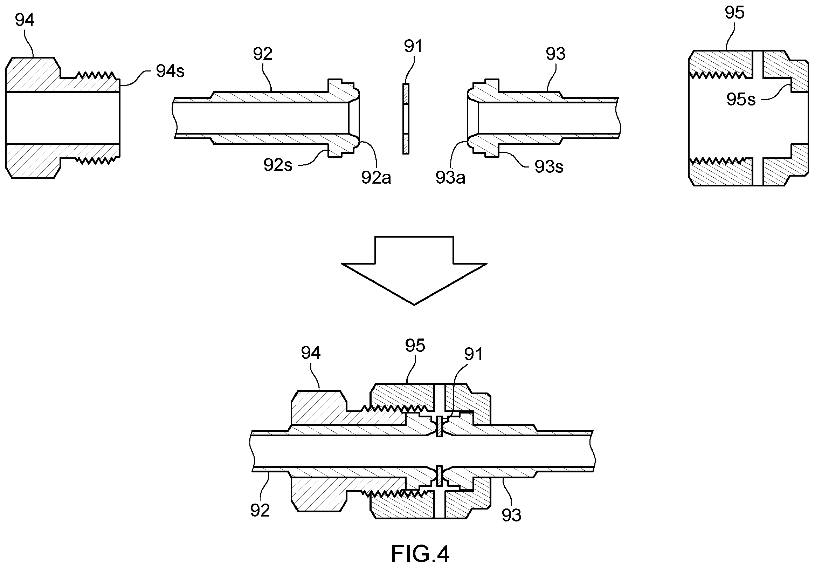

Here, an aspect of the joint portion of the raw material supply pipe Ps of the present embodiment is illustrated in FIGS. 3 and 4. Specifically, the joint portion includes a metal gasket 91 having an annular thin plate shape, a pair of sleeve members 92 and 93 having a tubular shape and sandwiching the metal gasket from both surfaces, and a male nut member 94 and a female nut member 95 for tightening the pair of sleeve members toward the metal gasket. The pair of sleeve members 92 and 93 seal between their end surfaces 92a and 93a in a tube axis direction by bringing the end surfaces 92a and 93a into contact with a sealing surface of the metal gasket 91 to bite it from both sides. The pair of sleeve members 92 and 93 are inserted into the through holes of the male nut member 94 and the female nut member 95, respectively. The male nut member 94 and one sleeve member 92 inserted into the male nut member 94 are respectively provided with contact surfaces 94s and 92s orthogonal to the tube axis direction and facing each other. When the sleeve member 92 is inserted into the male nut member 94, the contact surfaces 94s and 92s contact each other. The female nut member 95 and the other sleeve member 93 inserted into the female nut member 95 are also provided with contact surfaces 95s and 93s, respectively, in the same manner. When the male nut member 94 is tightened with respect to the female nut member 95, the pair of sleeve members 92 and 93 are tightened to butt the end surfaces 92a and 93a with the metal gasket 91 interposed therebetween. As a result, the end surfaces 92a and 93a of the sleeve members 92 and 93 are sealed by biting into the sealing surface of the metal gasket 91. FIGS. 3 and 4 illustrate an aspect of the joint portion between the valve and the pipe member. The joint portion between the pipe members may have the same configuration. The structure of these joint portions is not limited to those illustrated in FIGS. 3 and 4 as long as sealing is performed by using a metal gasket, and other structures may be used.

This joint portion has high airtightness with the use of a metal gasket. For example, the joint portion has a leak rate of 4 × 10⁻¹¹ std·cm³/s or less in a helium leak test performed in accordance with Appendix 1 (normative) Vacuum spray method (spray method) of Method for helium leak testing of JIS Z 2331:2006.

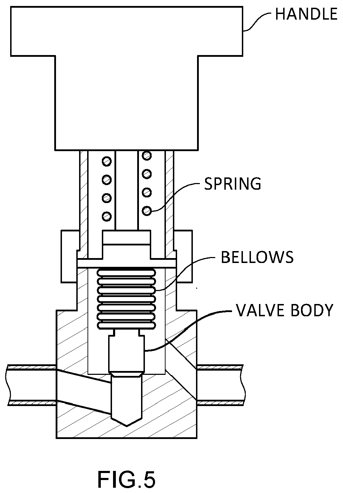

In the present specification, the gas valve means a valve having high airtightness (that is, having a low leak rate) suitable for semiconductor manufacturing, and it may control not only gas but also liquid. More specifically, this gas valve has a leak rate of 4 × 10⁻⁹ std·cm³/s or less in a helium leak test performed in accordance with Appendix 1 (normative) Vacuum spray method (spray method) of Method for helium leak testing of JIS Z 2331:2006. The gas valve may be either a diaphragm type valve or a bellows seal type valve. In the polymerization apparatus 100 of the present embodiment, at least all the raw material supply valves Vs provided in the raw material supply pipe Ps connecting the initiator container 12 and the reaction container 2 are configured using gas valves, and here, all the raw material supply valves Vs provided in all the plurality of raw material supply pipes Ps are configured using gas valves. An example of an internal configuration of a bellows seal type valve is illustrated in FIG. 5.

Further, in the polymerization apparatus 100 of the present embodiment, not only in the raw material supply pipe Ps but also in all the pipes directly or indirectly connected to the raw material containers 1, the joint portion is sealed by using a metal gasket, and the valve for opening and closing the channel is configured using a gas valve.

Specifically, all the joint portions of the solvent pipe Pc, the degassing pipe 81, and the plurality of pressurized gas supply pipes 72 are sealed by using a metal gasket. All the valves provided in these pipes are configured using gas valves.

Of the pipes constituting the polymerization apparatus 100, a bellows seal type gas valve is preferably used for the pipe through which liquid flows (the raw material supply pipe Ps and the solvent pipe Pc), and a diaphragm type gas valve is preferably used for the pipe through which gas flows (the pressurized gas supply pipe 72 and the degassing pipe 81).

In the polymerization apparatus 100 of the present embodiment, at least the raw material supply pipes Ps are connected to the reaction container 2 and the raw material containers 1 by welding joining. More specifically, all the plurality of raw material supply pipes Ps are welded and joined to the reaction container 2 and the corresponding raw material containers 1. This configuration enhances the airtightness at the connection portion between the raw material supply pipe Ps and each container.

In the present embodiment, all the pipes other than the raw material supply pipe Ps are also connected to the corresponding containers by welding joining. Specifically, each of the plurality of pressurized gas supply pipes 72 is connected to the pressurized gas container 71 and the corresponding raw material container 1 by welding joining. The solvent pipe Pc is also connected to the reaction container 2 and the solvent container 3 by welding joining, and the degassing pipe 81 is also connected to the reaction container 2 by welding joining.

Further, in the present embodiment, to improve airtightness of the reaction container 2, the stirring mechanism 5 is configured such that its constituent members do not penetrate the wall of the reaction container 2. Specifically, the stirring mechanism 5 includes a stirring blade 51 accommodated in the reaction container 2 and a drive mechanism 52 that is disposed outside the reaction container 2 (near the outer surface of the reaction container 2) and rotates the stirring blade 51 with magnetic force.

The stirring blade 51 includes a magnet member 51a rotatably provided at a position facing the drive mechanism 52 across a wall in the vicinity of the inner surface of the reaction container 2, a shaft member 51b having a rod shape coupled to the magnet member 51a, and a blade member 51c coupled to the shaft member 5 1b. Then, the drive mechanism 52 generates a magnetic field by, for example, applying a current to a coil (not illustrated), and rotates the magnet member 51a in the reaction container 2 using the magnetic field, thereby rotating the shaft member 51b and the blade member 51c coupled to the magnet member 51a. The drive mechanism 52 and the magnet member 51a are preferably provided near the upper surface or near the bottom surface of the reaction container 2.

Next, the operation of the polymerization apparatus 100 of the present embodiment will be briefly described.

First, a vacuum pump 82 is started, and the inside of the reaction container 2 and the inside of the raw material supply pipe Ps connected to the reaction container 2 are degassed by the degassing mechanism 8. Next, the inside of the reaction container 2 is cooled to -70°C or less by the cooling mechanism 4. After the inside of the reaction container 2 is sufficiently degassed and depressurized, the raw material supply valve Vs and the degassing valve 83 are closed. Next, the plurality of solvent valves Vc are sequentially opened from the downstream side (reaction container 2 side), and the polymerization solvent contained in the solvent container 3 is supplied into the reaction container 2. At this time, the polymerization solvent is supplied into the reaction container 2 in a state of being vaporized in the depressurized solvent pipe Pc, is cooled in the reaction container 2, and is liquefied again. Then, after the inside of the reaction container 2 is sufficiently cooled, the pressure feeding mechanism 7 is driven to feed the raw material from each raw material container 1 with pressure, and a polymerization initiator (Sec-BuLi), a first raw material monomer (styrene), a binder (1,1-diphenylethylene), and a second raw material monomer (methyl methacrylate) are sequentially supplied into the reaction container 2 to perform polymerization reaction. Here, every time each raw material is supplied to the reaction container 2, stirring is performed by the stirring mechanism 5. Finally, a reaction stopper such as methanol is supplied to the reaction container 2 to stop the polymerization reaction. A polystyrene-polymethyl methacrylate copolymer can be thus synthesized.

According to the polymerization apparatus 100 of the present embodiment configured as described above, all the joint portions included in each pipe are sealed by using a metal gasket having high airtightness, a gas valve having high airtightness is used as the valve provided in each pipe, each pipe and the container are connected by welding joining, and the stirring mechanism 5 does not penetrate the wall of the reaction container 2. Thus, the amount of components (O₂, CO₂, and H₂O) in air to be mixed in each pipe and the reaction container 2 can be dramatically reduced. This makes it possible to prevent deactivation of the polymerization initiator and deactivation of the growing terminal caused by mixing of H₂O, and to prevent stop of the anionic polymerization reaction during the initiation reaction and the growth reaction. As a result, anionic polymerization is stably performed, and a polymer having a small variation in molecular weight distribution can be synthesized. Further, by reducing the mixing amount of CO₂ or O₂, the composition of the polymer to be synthesized can be brought close to the theoretical value.

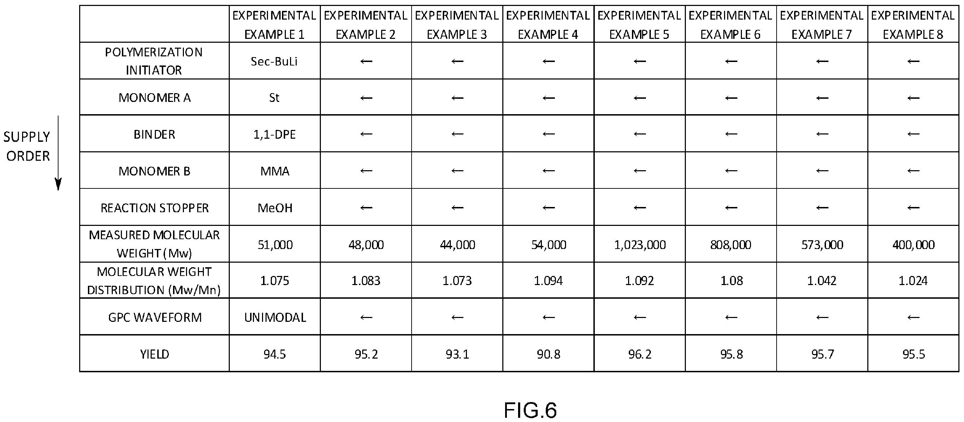

FIG. 6 shows the results of performing anionic polymerization (Experimental Examples 1 to 8) using the polymerization apparatus 100 of the present embodiment. In Experimental Examples 1 to 8, a polymerization initiator (Sec-BuLi), a raw material monomer A (styrene), a binder (1,1-diphenylethylene), a raw material monomer B (methyl methacrylate), and a reaction stopper (MeOH) were sequentially supplied into the reaction container 2, and a polystyrene-polymethyl methacrylate copolymer was synthesized using the polymerization apparatus 100. The obtained polystyrene-polymethyl methacrylate copolymer was diluted with THF to 0.1 wt%, and the molecular weight thereof was measured in terms of polystyrene by GPC. As can be seen from the results in FIG. 6, it was confirmed that according to the polymerization apparatus 100 of the present embodiment, a BCP (block copolymer) having a molecular weight distribution (Mw/Mn) of 1.024 or more and 1.094 or less in a weight average molecular weight (Mw) range of 44,000 or more and 1,023,000 or less was able to be synthesized at a yield of 90% by enhancing airtightness and dramatically reducing components in air to be mixed. In addition, in all the experimental examples, the waveform of GPC showed unimodality.

The present invention is not limited to the above embodiment.

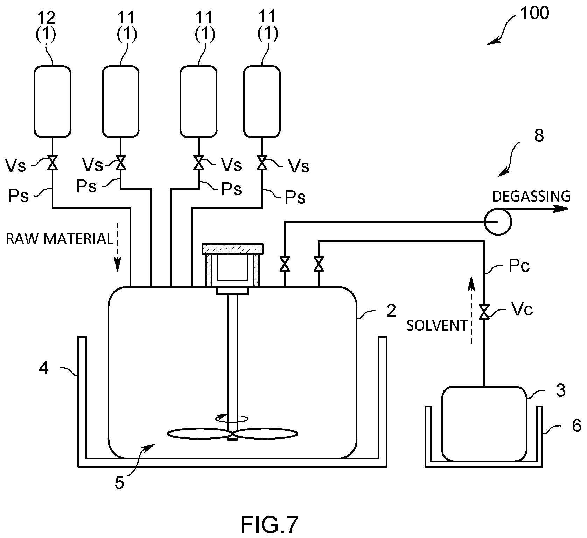

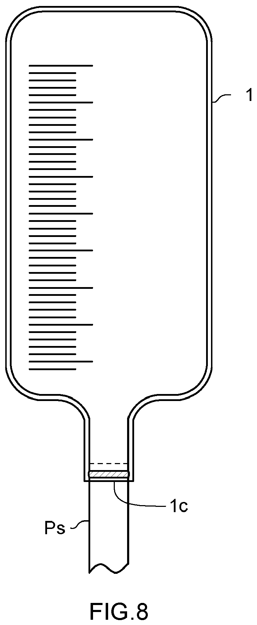

For example, the polymerization apparatus 100 of the above embodiment supplies the raw material to the raw material supply pipe Ps using the pressure feeding mechanism 7, but the present invention is not limited to this configuration. As illustrated in FIG. 7, the polymerization apparatus 100 of another embodiment may be configured to manually supply the raw materials without using the pressure feeding mechanism 7. In this case, each raw material container 1 may be disposed above the reaction container 2, and the raw materials may flow into the reaction container 2 by their own weight. In this form, as illustrated in FIG. 8, each raw material container 1 is preferably made of glass, and a scale for weighing is preferably provided on the surface of the container so that the user can check the amount of the raw material supplied to the reaction container 2. The outer surface of each raw material supply pipe Ps made of metal is preferably covered with a mouth 1c of the raw material container 1 made of glass, and the supply pipe and the mouth are preferably connected by welding.

In the above embodiment, all the joint portions of all the pipes included in the polymerization apparatus 100 are sealed by using a metal gasket, but the present invention is not limited to this configuration. As long as at least some of the joint portions of some of the raw material supply pipes Ps are sealed by using a metal gasket, the other joint portions may be sealed by using a gasket other than metal, such as fluororesin.

Further, in the above embodiment, all the valves provided in all the pipes included in the polymerization apparatus 100 are gas valves, but the present invention is not limited to this configuration. As long as at least some of the raw material supply valves provided in some of the raw material supply pipes Ps are gas valves, the other valves do not have to be gas valves.

In another embodiment, each pipe and the container connected to the pipe do not have to be joined by welding. Further, although the stirring mechanism 5 is configured to rotate the stirring blade 51 with magnetic force, the present invention is not limited to this configuration. The stirring mechanism 5 may be configured such that some of the constituent members penetrate the wall of the reaction container 2.

Further, the polymerization apparatus 100 of the above embodiment is for performing living anionic polymerization, but the present invention is not limited to this configuration.

The present invention is not limited to the above embodiment, and it is needless to say that various modifications can be made without departing from the gist of the present invention.

### <Effectiveness of sealing joint portion of pipe with metal gasket>

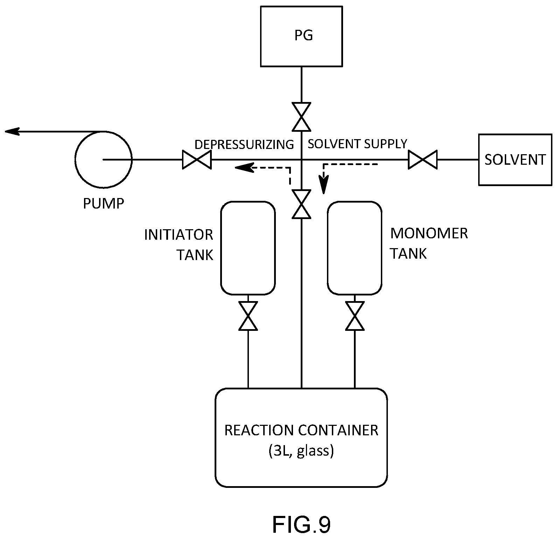

The inventors of the present invention checked the effectiveness of sealing a joint portion of a pipe with a metal gasket in a polymerization apparatus by performing experiments. Specifically, with the experimental model illustrated in FIG. 9, anionic polymerization was performed by the following procedure, and the polymer obtained as a synthetic product was analyzed (Experimental Examples 9 and 10). Different materials of the gasket of the joint portion of the pipe in anionic polymerization were used in Experimental Example 9 and Experimental Example 10. Specifically, in Experimental Example 9, the joint portion of the pipe was sealed with a metal gasket, and in Experimental Example 10, polymerization was performed with the joint portion of the pipe sealed with a resin gasket. Hereinafter, a specific experimental procedure will be described. In both Experimental Example 9 and Experimental Example 10, a gas valve satisfying a leak rate of 4 × 10⁻⁹ std·cm³/s or less was used as the switching valve.

### (Synthesis of polystyrene)

First, reagent containers individually containing a raw material monomer (styrene), a polymerization initiator (Sec-BuLi), and a reaction stopper (methanol), and a thermosensor were attached to a reaction container. The reaction container was immersed in a stainless steel container filled with methanol and dry ice, and then filled with THF (solvent) by distillation under reduced pressure. After filling with THF, it was confirmed that the temperature in the reaction container was -70°C or less. Then, the polymerization initiator was added dropwise, and the mixture was stirred. After the lapse of time, the raw material monomer was added dropwise, and the mixture was stirred. After the lapse of time, the reaction stopper was added dropwise, and the mixture was stirred to obtain a reaction liquid.

### (Reprecipitation of polystyrene)

Next, pure water was added to a beaker, and the reaction liquid obtained in the polymerization experiment was added dropwise at a predetermined speed while being stirred. After the dropwise addition, the mixture was stirred, washed, and filtered to obtain a white powder. The obtained powder was dried in a vacuum dryer.

### (Measurement of molecular weight of polystyrene)

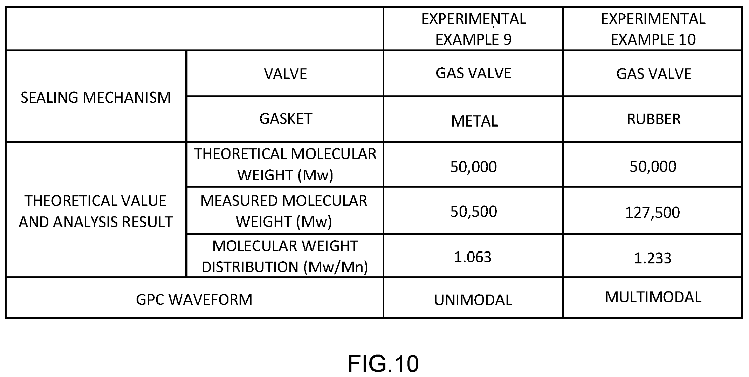

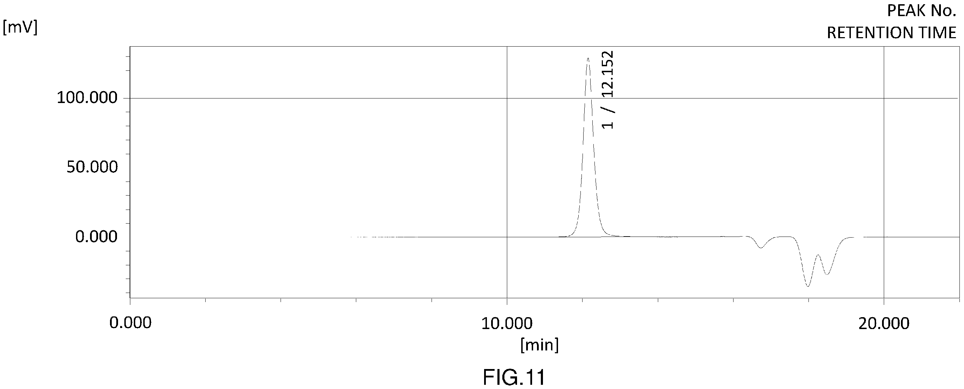

After drying, the obtained polystyrene was diluted with THF, and the molecular weight was measured in terms of polystyrene by GPC. The analysis results are shown in FIG. 10. A GPC waveform obtained in Experimental Example 9 is illustrated in FIG. 11.

As can be seen from the table of FIG. 10, in Experimental Example 9 in which the joint portion of the pipe was sealed with a metal gasket, it was confirmed that the measured molecular weight showed a value (50,500) close to the theoretical molecular weight, and the molecular weight distribution also showed a value (1.063) close to monodispersion. Further, as shown in FIG. 11, in Experimental Example 9, a unimodal peak was confirmed in the vicinity of 12 minutes in the GPC waveform, and it was confirmed that inhibition of polymerization reaction caused by air leakage was prevented, and the polymerization reaction proceeded well. On the other hand, in Experimental Example 10 in which the joint portion of the pipe was sealed with a rubber gasket, the measured molecular weight reached a value (127,500) of twice or more the theoretical molecular weight, and the molecular weight distribution showed a wide value (1.233). In addition, the waveform of GPC shows multimodality, and it is considered that inhibition of polymerization reaction caused by air leakage has occurred.

### (Effectiveness of using gas valve of extremely low leak rate)

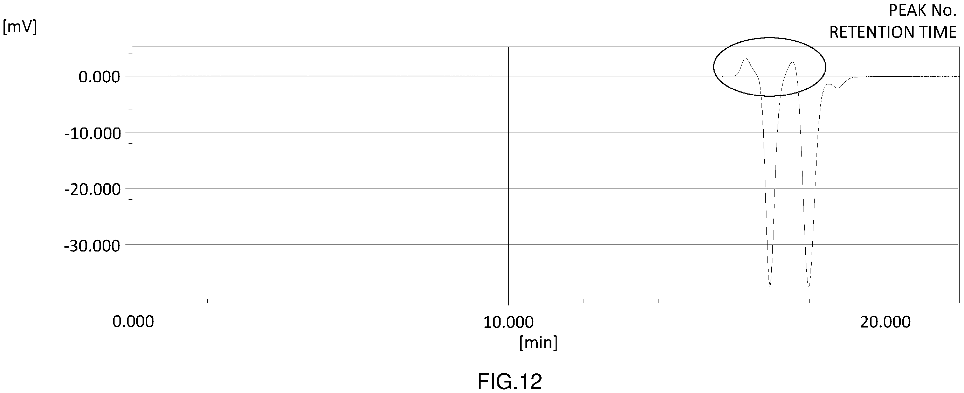

FIG. 12 shows the result (GPC waveform) of a comparative experiment (Experimental Example 11) conducted under the same conditions as in Experimental Example 9 except that a valve having low airtightness (1.073 × 10⁻⁵ std·cm³/s) was used as the switching valve. As can be seen from the GPC waveform of Experimental Example 11, when a valve having low airtightness (that is, a valve having a high leak rate) was used, the peak observed in Experimental Example 9 around 12 minutes could not be confirmed. From this, it was found that in Experimental Example 11, inhibition of polymerization reaction caused by air leakage was not prevented, and the polymerization reaction did not proceed well. The peak around 16 to 18 minutes is a peak derived from a developing solvent.

### Reference Signs List

- 100: Polymerization apparatus
- 1: Raw material container
- 2: Reaction container
- Ps: Raw material supply pipe
- Vs: Switching valve

## Claims

1. A polymerization apparatus for performing anionic polymerization, the polymerization apparatus comprising:
a raw material container that contains a raw material;
a reaction container that is connected to the raw material container via a raw material supply pipe and causes anionic polymerization of the raw material supplied; and
a switching valve that is provided in the raw material supply pipe and opens and closes the raw material supply pipe,
wherein
the raw material supply pipe includes a joint portion sealed by using a metal gasket, and
the switching valve is a gas valve.

2. The polymerization apparatus according to claim 1, wherein the switching valve has a leak rate of 4 × 10⁻⁹ std·cm³/s or less.

3. The polymerization apparatus according to claim 1 or 2, wherein the joint portion has a leak rate of 4 × 10⁻¹¹ std·cm³/s or less.

4. The polymerization apparatus according to any one of claims 1 to 3, wherein the raw material supply pipe is connected to the reaction container and the raw material container by welding joining.

5. The polymerization apparatus according to any one of claims 1 to 4, comprising:
a plurality of the raw material containers; and
a plurality of the raw material supply pipes respectively connecting the plurality of the raw material containers and the reaction container,
wherein
all the joint portions included in the plurality of the raw material supply pipes are sealed by using a metal gasket, and
all the switching valves provided in the plurality of the raw material supply pipes are gas valves.

6. The polymerization apparatus according to claim 5, wherein all the plurality of the raw material supply pipes are connected to the reaction container and the corresponding raw material containers by welding joining.

7. The polymerization apparatus according to any one of claims 1 to 6, comprising a stirring mechanism that stirs the raw material supplied to the reaction container,
the stirring mechanism including a stirring blade accommodated in the reaction container, and a drive mechanism that is disposed outside the reaction container and rotates the stirring blade with magnetic force.

8. The polymerization apparatus according to any one of claims 1 to 7, comprising a pressure feeding mechanism for feeding the raw material in the raw material container to the raw material supply pipe with pressure,
the pressure feeding mechanism including:
a pressurized gas container that contains a pressurized gas;
a pressurized gas supply pipe that connects the pressurized gas container and the raw material container;
a valve for pressurized gas that opens and closes the pressurized gas supply pipe;
a weighing device that measures a weight of the raw material container; and
a control unit that adjusts an opening degree of the valve for pressurized gas based on the weight of the raw material container acquired by the weighing device.

9. The polymerization apparatus according to claim 8, wherein
the pressurized gas supply pipe includes a joint portion sealed by using a metal gasket,
the valve for pressurized gas is a gas valve, and
the pressurized gas supply pipe is connected to the pressurized gas container and the raw material container by welding joining.

10. The polymerization apparatus according to any one of claims 1 to 9 for performing living anionic polymerization.

11. The polymerization apparatus according to any one of claims 1 to 10, wherein in a range of 44,000 ≤ Mw ≤ 1,023,000, a block copolymer satisfying 1.024 ≤ Mw/Mn ≤ 1.094 can be synthesized at a yield of 90% or more,
where Mw is a weight average molecular weight, and Mn is a number average molecular weight.

12. A polymerization apparatus for performing anionic polymerization, the polymerization apparatus comprising:
a raw material container that contains a raw material;
a reaction container that is connected to the raw material container via a raw material supply pipe and causes anionic polymerization of the raw material supplied; and
a switching valve that is provided in the raw material supply pipe and opens and closes the raw material supply pipe,
wherein
the raw material supply pipe includes a joint portion having a leak rate of 4 × 10⁻¹¹ std·cm³/s or less, and
the switching valve has a leak rate of 4 × 10⁻⁹ std·cm³/s or less.
